# EUROPEAN PATENT APPLICATION

(11) **EP 1 724 954 A1**
(43) Date of publication of application: **22.11.2006**
(21) Application number: 05022701.6
(22) Date of filing: 18.10.2005
(51) Int. Cl.: H04H 1/00, F24F 11/00, G05D 23/19

(54) **Operation control apparatus and method for air conditioner using airwave broadcast date**

(30) Priority: 13.05.2005 KR 2005040293
(71) Applicant: Samsung Electronics Co., Ltd., Yeongtong-gu Suwon-si, Gyeonggi-do (KR)
(72) Inventor: Ha, Chang Ho, Dong Gwonseon-Gu, Suwon-Si, Gyeonggi-Do (KR)
(74) Representative: Grünecker, Kinkeldey, Stockmair & Schwanhäusser Anwaltssozietät

(57) **Abstract**

An apparatus and method for operation control of an air conditioner using broadcast data. The operation of the air conditioner is automatically controlled on the basis of extracted weather information. The control method includes receiving airwave broadcast data, extracting weather information from the received airwave broadcast data, and controlling the operation of the air conditioner according to the extracted weather information.

## Description

### BACKGROUND OF THE INVENTION

### 1. Field of the Invention

The present invention relates to an apparatus and method for controlling the operation of an air conditioner using an airwave data broadcasting service. More particularly, to an apparatus and method for controlling the operation of an air conditioner using broadcasting data, wherein the operation of the air conditioner is automatically controlled on the basis of weather information extracted from the airwave broadcast data.

### 2. Description of the Related Art

In general, an air conditioner is an appliance for indoor cooling or heating. The air conditioner uses a general refrigeration cycle where liquid coolant is circulated within the air conditioner. When the liquid coolant is vaporized, it absorbs heat, cooling its surroundings. When the gaseous coolant is liquefied, it releases heat, heating its surroundings. The cooling or heating operation is determined by the circulation direction of the coolant.

A conventional air conditioner includes a dehumidification mode that raises humidity in a heating operation during the winter, when humidity is low, and lowers humidity in a cooling operation during the summer, when humidity is high. In addition, the conventional air conditioner includes an air cleaning capability to clean polluted indoor air.

The top priority function of the air conditioner is to appropriately control the temperature and humidity according to weather conditions. Hence, the indoor environment provided by the operation of the air conditioner to the user is also associated with the weather conditions. Consequently, there is a need for a control method for the operation of the air conditioner taking the weather conditions into consideration.

In order to control the operation of the air conditioner in connection with the weather conditions, weather information is inputted from the outside to the air conditioner. To this end, a method has been proposed that installs multiple sensors including temperature, humidity, and atmospheric pressure sensors directly in the air conditioner to control the operation of the air conditioner.

However, outdoor weather conditions changing in real time (for example, outdoor temperature) cannot be accurately known with these sensors. Hence, there exist problems that this operation control method could cause overcooling and an electric power shortage due to excessive use of electric power.

To solve these problems, the weather information must be supplied in real time to the air conditioner through broadcasting services, computer data communications, or telephone lines. For the real time weather information supply through computer data communications or telephone lines, it is burdensome to establish a wired electrical connection between the air conditioner and an extemal communication device.

In Japanese Patent Laid-Open Publication No. 2001-333030, a system has been disclosed that operates various peripheral devices in a home including an air conditioner using airwave broadcast data from broadcasting equipment. In this system, the broadcasting equipment distributes a broadcasting program composed of video and audio data, and operation control data to operate the peripheral devices through broadcast waves. The broadcast waves are received by a receiver (set-top box) installed in the home or the like. The receiver decodes the broadcast waves and extracts the broadcasting program data and the operation control data. The broadcasting program data are displayed on a display device. The operation control data are sent to the peripheral devices through a wired or wireless communication medium.

The broadcasting equipment encodes the operation control data in a predetermined data format and distributes it together with the broadcasting program data according to a timetable so as to give a vivid feeling of reality to the user watching the program.

For example, when a telephone rings in a scene of the broadcasting program, a telephone installed in the user's home rings also, heightening a feeling of reality. When the luminosity of a room has to be changed in a certain scene (ghosts or bugaboos appear, for example), fluorescent lamps installed at the user's room are controlled to change the luminosity thereof, increasing a sensation of fear. When room temperature, humidity, or an airflow rate has to be changed in a scene (coldness at the North or South Pole, or heat during hot summer, for example), an air conditioner installed at the user's home is controlled according to the corresponding scene of the program to heighten a feeling of reality.

However, the conventional system using a broadcasting program may enable the user to watch the broadcasting program with an increased feeling of reality, but it does not propose a method that provides a pleasant indoor environment by utilizing weather information extracted from airwave broadcast data.

### SUMMARY OF THE INVENTION

Accordingly, it is an aspect of the invention to provide an apparatus and method for operation control of an air conditioner that extracts weather information supplied in real time through a data-receiving module for receiving airwave broadcast data, and automatically controls an operation mode of the air conditioner based upon the extracted weather information.

It is another aspect of the present invention to provide an apparatus and method for operation control of an air conditioner using broadcast data that do not overcool the room air during the summer and appropriately control humidity in the rainy season using weather information supplied in real time, thereby creating a more pleasant indoor environment.

It is yet another aspect of the invention to provide an apparatus and method for operation control of an air conditioner using broadcast data that can raise in advance an unusual weather alarm, such as an indication of Asian dust during the spring, high ozone concentration, or high fine particle concentration based upon the weather information supplied thereto in real time.

Additional aspects and/or advantages of the invention will be set forth in part in the description which follows and, in part, will be apparent from the description, or may be learned by practice of the invention.

These foregoing and/or other aspects of the present invention are achieved by providing a method for air conditioner operation control using broadcast data including receiving airwave broadcast data, extracting weather information from the received airwave broadcast data, and controlling an operation of an air conditioner according to the extracted weather information.

The controlling of the operation of the air conditioner includes controlling a temperature setting and an operation mode of the air conditioner according to the extracted weather information.

The controlling of the operation of the air conditioner further includes controlling the operation of the air conditioner by selecting only data associated with pre-stored region information from the extracted weather information.

The method further includes determining when information regarding unusual weather conditions such as an occurrence of Asian dust, high ozone concentration, and high fine particle concentration is present in the extracted weather information, and displaying a corresponding alarm.

Another aspect of the present invention is achieved by providing an apparatus for air conditioner operation control using broadcast data, the apparatus including a data receiver to receive airwave broadcast data, an information extractor to extract weather information from the received airwave broadcast data, and a controller to control an operation of an air conditioner according to the extracted weather information.

The controller controls a temperature setting and an operation mode of the air conditioner according to the extracted weather information.

The controller controls the operation of the air conditioner by selecting only data associated with pre-stored region information from the extracted weather information.

When information regarding unusual weather conditions such as an occurrence of Asian dust, high ozone concentration, and high fine particle concentration is present in the extracted weather information, the controller displays an alarm through a display.

The apparatus further includes an information processor to process the weather information extracted by the information extractor into the weather information having a predefined protocol data format, and the weather information includes information regarding region, current weather, current temperature, precipitation, cumulative precipitation, wind direction, wind velocity, dust concentration, ozone concentration, and Asian dust alarm.

The apparatus further includes an information storage to store coded region information regarding a region where the air conditioner is installed.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating an operation control apparatus for an air conditioner using broadcast data according to an embodiment of the present invention;
FIG. 2 is a view illustrating a protocol data format of the weather information according to an embodiment of the present invention; and
FIG 3 is a flow chart illustrating an operation control method for an air conditioner using broadcast data according to the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

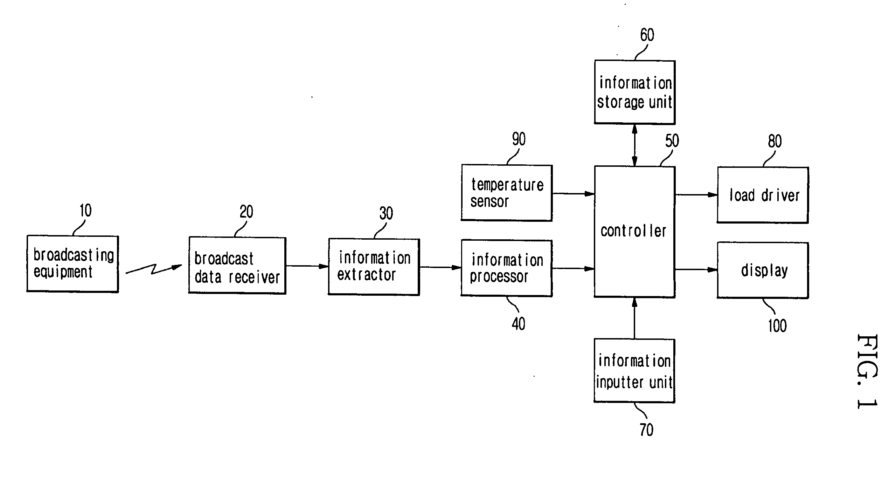

FIG 1 is a block diagram illustrating an operation control apparatus for an air conditioner using broadcast data according to an embodiment of the present invention.

An airwave data broadcasting service refers to a data transmission service such as a DARC (Data Radio Channel) service and a DMB (Digital Multimedia Broadcasting) service, where contents comprising traffic information, stock market information, and news are transmitted in the form of text data through a radio band.

The DARC service is an advanced broadcasting service where a digital character signal is mixed in an FM radio band and transmitted. A DARC system provides content services including weather information, traffic information, stock market information, and news services through radios. In Korea, MBC-FM (Munhwa Broadcasting Corporation) provides this service.

The DMB service is a service whereby even a user in motion can enjoy high definition digital images and CD-quality music anytime, anywhere through satellite or terrestrial DMB systems. It includes content services such as weather information, traffic information, stock market information, and news services.

Weather information is broadcast at regular time intervals via a channel based on the DARC or DMB system. The present invention collects airwave broadcast data, extracts only weather related information, and automatically controls the operation of the air conditioner (temperature, airflow rate, airflow direction, operation mode, and the like) on the basis of the extracted weather information, thereby maintaining a more pleasant indoor environment.

As shown in FIG. 1, the operation control apparatus for an air conditioner using broadcast data according to an embodiment of the present invention comprises broadcasting equipment 10, a broadcast data receiver 20, an information extractor 30, an information processor 40, a controller 50, an information storage unit 60, an information inputting unit 70, a load driver 80, a temperature sensor 90, and a display 100.

The broadcasting equipment 10 is installed in a broadcasting company or a broadcast data provider, and broadcasts contents including weather information, traffic information, stock market information, and news as broadcast data in the form of text, like the DARC or DMB system.

The broadcast data receiver 20 is a data-receiving module which receives and demodulates the broadcast data from radio signals of a specific frequency band transmitted from the broadcasting equipment 10, and is a DARC or DMB receiving module according to a signal demodulation method.

The information extractor 30 parses the broadcast data received through the broadcast data receiver 20 and extracts only weather-related information from the received broadcast data.

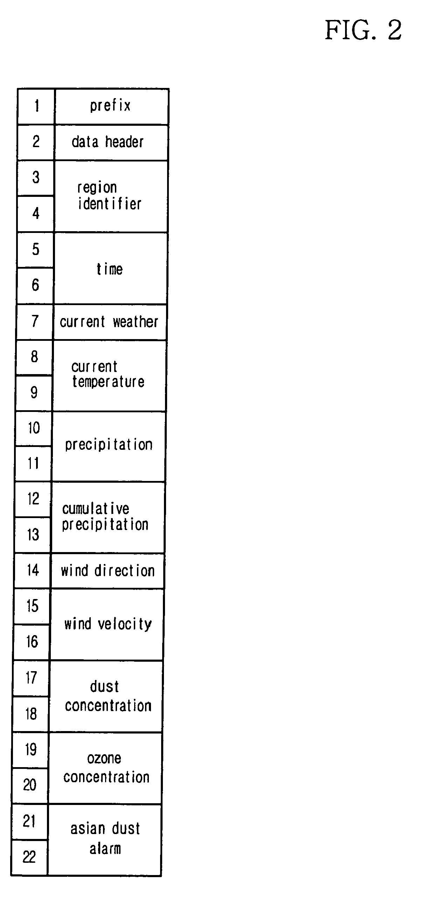

The information processor 40 processes the weather-related information extracted by the information extractor 30 into weather information having a predefined protocol data format usable for the operation control of the air conditioner. The protocol data format of the weather information is shown in FIG. 2.

The protocol data format, in FIG 2., of the processed weather information is a total of 20 bytes in size excluding 1 byte for a prefix and another 1 byte for a data header. The protocol data format allocates 2 bytes for a region identifier, 2 bytes for time, 1 byte for current weather, 2 bytes for current temperature, 2 bytes for precipitation, 2 bytes for cumulative precipitation, 1 byte for wind direction, 2 bytes for wind velocity, 2 bytes for dust concentration, 2 bytes for ozone concentration, and 2 bytes for Asian dust alarm.

The controller 50 comprises a microcomputer of an indoor unit of the air conditioner and a microcomputer of an outdoor unit of the air conditioner. Based upon the processed weather information, the controller 50 adjusts control settings of the indoor unit and outdoor unit, and determines how to control an operation mode, temperature, an airflow rate, an airflow direction, an Asian dust alarm, an ozone alarm, and the like.

The controller 50 automatically controls the operation mode, temperature, airflow rate, airflow direction, Asian dust alarm, air cleaning, and the like in accordance with the current weather conditions. Thus, the air conditioner can maintain a pleasant indoor environment and can heighten user convenience.

The information storage unit 60 stores coded information regarding the region where the air conditioner is installed, and other setting information. The information inputting unit 70 comprises a manipulator for inputting a code associated with the region (i.e., location information) to be stored in the information storage unit 60 and the setting information desired by the user including temperature, airflow rate, and operation mode (for example, automatic control mode: automatic adjustment mode using a weather forecast).

The load driver 80 operates the indoor and outdoor units according to control signals generated from the controller 50 by driving loads (a compressor, a fan, or other peripherals, for example) such that the air conditioner can maintain an optimal temperature and a mode corresponding to the current weather.

The temperature sensor 90 senses the temperature of the room where the air conditioner is installed, and sends the sensed temperature to the controller 50. The display 100 displays the Asian dust alarm during the spring, the ozone alarm, and fine particle concentration according to control signals generated from the controller 50. The display 100 can include a light emitting diode (LED) or liquid crystal display (LCD) which is generally applicable to a display panel.

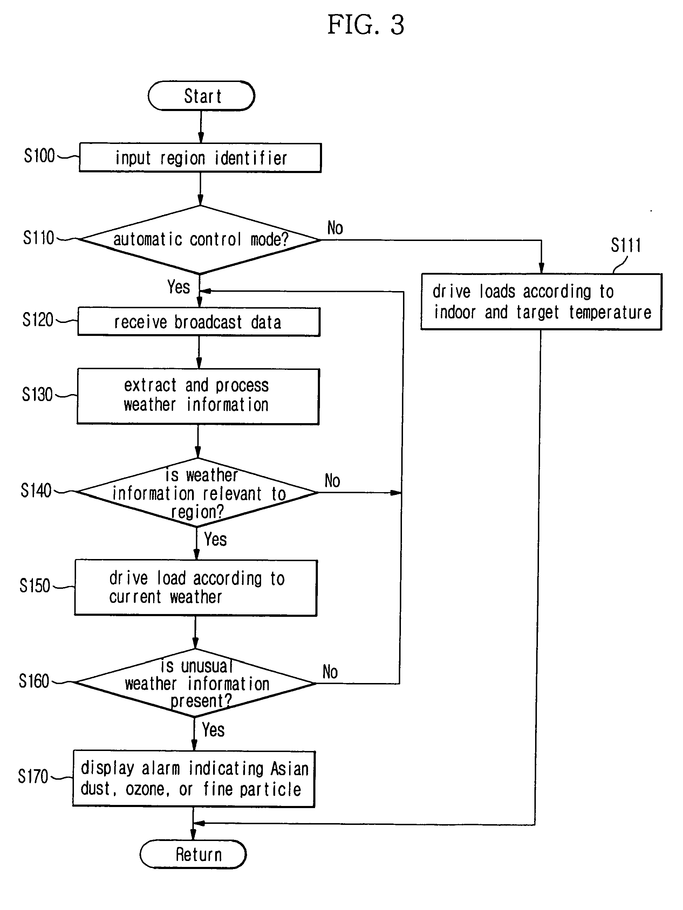

Hereinafter, the operation of the operation control apparatus for an air conditioner using broadcast data and its advantages are explained. FIG. 3 is a flow chart illustrating an operation control method for the air conditioner using broadcast data according an embodiment of the present invention.

The present invention relates to control of a weather-sensitive home appliance such as an air conditioner or a refrigerator using real time weather information contained in an airwave data broadcasting service. The explanation centers on the air conditioner.

In operation 100, the user inputs, via the information inputting unit 70, the region code corresponding to a region where the air conditioner is installed and setting information including temperature, airflow rate, and control mode to the controller 50.

From operation 100, the process moves to operation 110, where the controller 50 determines whether the control mode inputted from the information inputting unit 70 is an automatic control mode. When it is determined in operation 110 that the automatic control mode is not selected, the process moves to operation 111, where the controller 50 controls the load driver 80 according to a difference between the current room temperature sensed through the temperature sensor 90 and the temperature setting so that the user specified operation can be performed.

When it is determined in operation 110 that the automatic control mode is selected, the process moves to operation 120, where the broadcast data receiver 20 of the air conditioner receives and demodulates the airwave broadcast data carried with radio signals of a specific frequency band transmitted by the broadcasting equipment 10 installed at a broadcasting company or a data provider.

From operation 120, the process moves to operation 130, where the information extractor 30 receives and parses the broadcast data demodulated by the broadcast data receiver 20 and extracts only weather-related information. The information processor 40 processes the weather information extracted by the information extractor 30 into weather information having the protocol data format usable for the operation control of the air conditioner, and sends the processed weather information to the controller 50.

The weather information processed by the information processor 40 has a protocol data format shown in FIG. 2, and is a total of 20 bytes in size. The protocol data format allocates 2 bytes for a region identifier, 2 bytes for time, 1 byte for current weather, 2 bytes for current temperature, 2 bytes for precipitation, 2 bytes for cumulative precipitation, 1 byte for wind direction, 2 bytes for wind velocity, 2 bytes for dust concentration, 2 bytes for ozone concentration, and 2 bytes for Asian dust alarm.

From operation 130, the process moves to operation 140, where the controller 50 determines whether the region identifier of the processed weather information is equal to the region code inputted through the information inputting unit 70, and selects only the processed weather information relevant to the region where the air conditioner is installed.

After selection of the weather information relevant to the region in operation 140, the process moves to operation 150, where the controller 50 automatically controls the room temperature, airflow rate, airflow direction, operation mode, and the like by allowing the load driver 80 to drive the indoor and outdoor units.

For example, if it is cloudy and the current temperature is low, meaning that the current humidity is high relative to the temperature, the air conditioner is controlled to operate in a dehumidification mode. If it is clear and the current temperature is high, meaning that the current temperature is relatively high relative to the humidity, the air conditioner is controlled to operate in a cooling mode and the temperature setting is adjusted corresponding to the current outdoor temperature.

The cooling mode and the dehumidification mode can also be distinguished by the precipitation information provided in the weather information. For example, if it has rained for a short term, meaning that the current humidity is relatively low relative to the current temperature, the air conditioner is controlled to operate in the cooling mode and the temperature setting is controlled corresponding to the current outdoor temperature. If it has rained for a long term, meaning that the current humidity is high relative to the current temperature, the air conditioner is controlled to operate in the dehumidification mode.

The control method mentioned above can be written to a ROM table having current weather, current temperature, precipitation, cumulative precipitation, and the like as inputs, and temperature and operation mode as outputs. The ROM table can be set at the controller 50. The control method for controlling the temperature and operation mode can also be implemented in the controller 50 with a control logic using fuzzy inference.

Accordingly, the controller 50 can collect data regarding the current outdoor temperature in near real-time and the indoor temperature can be controlled not to become too low. Hence, during the summer, sickness arising from overcooling and electric power shortage due to excessive use of electric power can be prevented. In the rainy season, the air conditioner operating in the dehumidification mode can appropriately control the humidity, so that the indoor air can be maintained to be not too damp and be pleasant to the user.

In addition, the controller 50 can optimally control, without additional user intervention, the air conditioner corresponding to the weather information provided in real time, thus user convenience can be increased.

From operation 150, the process moves to operation 160, where the controller 50 determines whether unusual weather conditions such as occurrence of Asian dust, high ozone concentration, and high fine particle concentration are present in the processed weather information. When it is determined that any one of these unusual weather conditions is present in operation 160, the process moves to operation 170, where the controller 50 controls the display 100 to display an alarm indicating the occurrence of Asian dust, high ozone concentration, or high fine particle concentration. Thus, the user can know when to open or close windows.

Asian dust is a geographical condition which occurs often during the spring in Korea, and can pollute the room air when the windows are open. By utilizing the real time weather information carried with the airwave, the Asian dust alarm contributes to prevention of indoor air pollution due to Asian dust. In addition to the Asian dust alarm, alarms indicating high ozone concentration and high fine particle concentration can contribute to maintenance of a pleasant indoor environment.

Though an embodiment of the present invention was explained using an air conditioner as an example, the present invention is not limited to air conditioners and is also applicable to various home appliances such as a refrigerator being affected by weather conditions and an air purifier for a pleasant indoor environment, achieving the same objects and effects as those of the case of the air conditioner.

As explained above, the apparatus and method for operation control of the air conditioner using broadcast data according to the present invention extracts weather information supplied in real time through a data-receiving module for receiving airwave broadcast data, and automatically controls the operation mode of the air conditioner on the basis of the extracted weather information, therefore, enhances the user's convenience.

In addition, using weather information supplied in real time the present invention does not overcool the room air during the summer, appropriately controls humidity in the rainy season, thereby creating a more pleasant indoor environment. The present invention can raise in advance an unusual weather alarm indicating Asian dust during the spring, high ozone concentration, or high fine particle concentration on the basis of the weather information supplied thereto in real time.

Although a few embodiments of the present invention have been shown and described for the purpose of disclosure, it would be appreciated by those skilled in the art that changes may be made in these embodiments without departing from the principles and spirit of the invention, the scope of which is defined in the claims and their equivalents.

## Claims

1. A method for controlling an operation of an air conditioner using airwave broadcast data comprising:
receiving the airwave broadcast data;
extracting weather information from the received airwave broadcast data; and
controlling an operation of the air conditioner according to the extracted weather information.

2. The method as set forth in claim 1, wherein the controlling of the operation of the air conditioner comprises controlling a temperature setting and an operation mode of the air conditioner according to the extracted weather information.

3. The method as set forth in claim 1, wherein the controlling of the operation of the air conditioner comprises collecting data associated with pre-stored region information from the extracted weather information and controlling the operation of the air conditioner on the based upon the collected data.

4. The method as set forth in claim 1, further comprising determining when information regarding unusual weather conditions including an occurrence of Asian dust, high ozone concentration, and high fine particle concentration is present in the extracted weather information, and displaying an alarmwhen the unusual weather information exists.

5. An apparatus for controlling an operation of an air conditioner using airwave broadcast data comprising:
a data receiver to receive the airwave broadcast data;
an information extractor to extract weather information from the received airwave broadcast data; and
a controller to control an operation of an air conditioner according to the extracted weather information.

6. The apparatus as set forth in claim 5, wherein the controller controls a temperature setting and an operation mode of the air conditioner according to the extracted weather information.

7. The apparatus as set forth in claim 5, wherein the controller controls the operation of the air conditioner by collecting data associated with pre-stored region information from the extracted weather information.

8. The apparatus as set forth in claim 5, wherein when information regarding unusual weather conditions such as an occurrence of Asian dust, high ozone concentration, and high fine particle concentration is present in the extracted weather information, the controller displays an alarm through a display.

9. The apparatus as set forth in claim 5, further comprising an information processor to process the weather information extracted by the information extractor into weather information having a predefined protocol data format.

10. The apparatus as set forth in claim 9, wherein the weather information comprises information regarding region, current weather, current temperature, precipitation, cumulative precipitation, wind direction, wind velocity, dust concentration, ozone concentration, and Asian dust alarm.

11. The apparatus as set forth in claim 5, further comprising an information storage unit to store coded region information regarding a region where the air conditioner is installed.

12. The apparatus as set forth in claim 5, further comprising a temperature sensor to sense a temperature of a room where the air conditioner is installed, and to send the sensed temperature to the controller.

13. The apparatus as set forth in claim 5, wherein the controller comprises a microcomputer of an indoor unit of the air conditioner and a microcomputer of an outdoor unit of the air conditioner, wherein the controller adjust control settings of the indoor unit and the outdoor unit.

14. The apparatus as set forth in claim 13, wherein the controller determines how to control at least one of an operation mode, a temperature, an airflow rate, an airflow direction, an asian dust alarm, and air cleaning in accordance with current weather conditions.

15. The apparatus as set forth in claim 11, further comprising an information inputting unit having a manipulator for inputting the coded region information to be stored in the information storage unit, and setting information as desired by a user.
